# EUROPEAN PATENT APPLICATION

(11) **EP 3 708 356 A1**
(43) Date of publication of application: **16.09.2020**
(21) Application number: 19162671.2
(22) Date of filing: 13.03.2019
(51) Int. Cl.: B32B 5/02, B32B 27/12, B32B 27/20, B32B 27/30, B32B 27/32, D06N 5/00, E04D 5/10

(54) **A WEATHERING STABLE THERMOCHROMIC ROOFING MEMBRANE**

(71) Applicant: SIKA TECHNOLOGY AG, 6340 Baar (CH)
(72) Inventor: Leeber, Blaise, Burlington, 01803 (US); De Leon, Carl, Brookline, 02446 (US); Whelan, Brian J., Canton, 02021 (US); Morse, David, Sandown, 03873 (US)
(74) Representative: Sika Patent Attorneys

(57) **Abstract**

The invention is directed to a roofing membrane (1) comprising a top waterproofing layer (2) and optionally a layer of fiber material (3), wherein the top waterproofing layer (2) comprises at least one thermoplastic polymer **P**, at least one thermochromic pigment **TP**, and at least one UV-light absorber **A**. Such roofing membranes are able to change their color as a response to a change in temperature, which enables controlling the amount of heat energy absorbed into the roofing membrane and transmitted to a roof structure. The invention is also directed to a method for producing a roofing membrane and to a method for covering a roof substrate using the roofing membranes of the present invention.

## Description

### Technical field

The present invention relates to the field of waterproofing of above ground building constructions by using polymeric roofing membranes. In particular, the present invention aims at providing weathering stable polymeric roofing membranes, which are able to change their color as response to change in ambient temperature.

### Background of the invention

In the field of construction polymeric sheets, which are often referred to as membranes or panels, are used to protect underground and above ground constructions, such as basements, tunnels, and flat and low-sloped roofs, against penetration of water. Roofing membranes used for waterproofing of flat and low-sloped roof structures are typically provided as single-ply or multi-ply membrane systems. In a single-ply system, the roof substrate is covered using a roofing membrane comprising a single waterproofing layer, which is typically mechanically stabilized with a reinforcement layer, such a layer of fiber material. Roofing membranes used in multi-ply systems typically comprise at least two waterproofing layers composed of same or different materials. Commonly used materials for single- and multi-ply roofing membranes include plastics, in particular plasticized polyvinylchloride (p-PVC), thermoplastic olefins (TPE-O, TPO), and thermoset elastomers such as ethylene-propylene diene monomer (EPDM).

The color of the roofing membrane has a significant influence on the amount of heat energy absorbed into the membrane from the sunlight. White or light colored roofing membranes effectively reflect sunlight, which reduces the amount of heat energy absorbed into buildings they cover compared to buildings covered with black or dark colored roofing membranes. The cooling effect obtained with white roofs translates into a reduction in operating costs and greenhouse gas emissions due to reduced need for air-conditioning. Consequently, white or light colored roofing membranes or roofing membranes having a light colored top coating are typically used in hot-climate regions. However, by the same principle, a white colored roof is undesirable during colder season due to the increased cost for heating a building that otherwise would have absorbed much more heat energy had it been covered by a traditional black colored roofing membrane. Consequently, an optimal roofing membrane would be able to undergo a change in color in response to changes in ambient temperature, in other words to have a white or light color at higher temperatures and a black or dark color at lower temperatures.

Various attempts have already been made to provide a roof covering with a temperature dependent color changing abilities. These have typically been based on the use of thermochromic substances in the roofing membrane or in a coating applied on the surface of the roofing membrane. Thermochromic substances are a class of organic and inorganic compounds, which have a different color depending on the temperature. The State-of-the-Art thermochromic substances have a poor UV-stability, which is a significant disadvantage in roofing applications wherein the color changing layer should maintain its properties during long periods of intensive exposure to UV-radiation. The challenges related to the UV-stability of thermochromic compounds have been tried to overcome by covering the layer comprising the color changing substances with a protective coating comprising UV-light absorbers/stabilizers. Published patent application US 2016/007642 A1 discloses a thermochromic coating, which is formed by applying a reflective, thermochromic, and protective coatings on a surface of a substrate such as a residential or industrial building material. The protective coating comprises a resin and UV-blocking material.

The main disadvantage of using multilayered thermochromic coatings is related to the increased complexity of such structures, which is translated into increased application costs. On the other hand, the stability of the protective coating is still a major problem in roofing applications since the coating can only be applied as a thin layer in order to retain its transparency to infrared radiation. Such layers are difficult to provide with sufficient stability and the protective coatings typically wear off after couple of years of weathering in hot-climate conditions resulting in exposure of the thermochromatic layer to the degrading effects of UV-radiation.

There is thus a need for a novel roofing membrane, which is able to change its color as response to a change in temperature and which can preserve its color changing properties during several years of exposure to UV-radiation and other environmental conditions.

### Summary of the invention

The object of the present invention is to provide a roofing membrane, which is able to change its color as response to a change in temperature and which can withstand 1000+ hours in the accelerated weathering testing (QUV) while preserving its thermochromic properties.

The subject of the present invention is a roofing membrane as defined in claim 1.

It was surprisingly found out that a roofing membrane comprising a top waterproofing layer comprising at least one thermoplastic polymer, at least one thermochromic pigment, and at least one UV-light absorber is able to solve or at least mitigate the problems of the prior art thermochromic roof coverings as discussed above.

In particular, it was surprisingly found out that the thermochromic properties of the roofing membrane are preserved during long term weathering tests simulating the effect of UV-radiation to which the roofing membrane is exposed to during its typical service life.

It was furthermore surprisingly found out that such thermochromic roofing membranes can be produced by conventional extrusion techniques from a dry blend of the thermoplastic polymer and the thermochromic pigment. This result can be considered to be unexpected since State-of-the-Art thermochromic pigments are quite sensitive to loads caused by pressure and heat, which are generated during the melt-mixing step of a typical extrusion process.

One of the advantages of the roofing membrane of the present invention is that it enables providing an active roof system, in which amount of heat energy, i.e. the amount electromagnetic radiation in the infrared wavelength range, absorbed into the roofing membrane depends on the ambient temperature. Consequently, the amount of operating costs and greenhouse gas emissions resulting from cooling the building during hot summer months and from heating the building during cold winter months can be effectively reduced.

Other aspects of the present invention are presented in other independent claims. Preferred aspects of the invention are presented in the dependent claims.

### Brief description of the Drawings

Fig. 1 shows a cross-section of a roofing membrane (1) comprising a top waterproofing layer (2) having a first and a second major surfaces and a layer of fiber material (3) covering the second major surface of the top waterproofing layer (2).
Fig. 2 shows a cross-section of a roofing membrane (1) comprising a top waterproofing layer (2), a layer of fiber material (3) covering the second major surface of the top waterproofing layer (2), and a bottom waterproofing layer (4), wherein the layer of fiber material (3) is positioned between the top and bottom waterproofing layers (2, 4).

### Detailed description of the invention

The subject of the present invention is a roofing membrane (1) comprising a top waterproofing layer (2) having a first and a second major surface and optionally a layer of fiber material (3) covering at least portion of the second major surface of the top waterproofing layer (2), wherein the top waterproofing layer (2) comprises:
a) At least one thermoplastic polymer **P**,
b) At least one thermochromic pigment **TP**, and
c) At least one UV-light absorber **A**.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "elastomer" refers to any polymer or combination of polymers, which is capable of recovering from large deformations, and which can be, or already is, modified to a state in which it is essentially insoluble (but can swell) in a boiling solvent. Typical elastomers are capable of being elongated or deformed to at least 200% of their original dimension under an externally applied force, and will substantially resume the original dimensions, sustaining only small permanent set (typically no more than about 20%), after the external force is released. As used herein, the term "elastomer" may be used interchangeably with the term "rubber." The term "molecular weight" refers to the molar mass (g/mol) of a molecule or a part of a molecule, also referred to as "moiety". The term "average molecular weight" refers to the number average molecular weight (Mₙ) of an oligomeric or polymeric mixture of molecules or moieties. The molecular weight may be determined by gel permeation chromatography.

The term "softening point" refers to a temperature at which compound softens in a rubber-like state, or a temperature at which the crystalline portion within the compound melts. The softening point is preferably determined by Ring and Ball measurement conducted according to DIN EN 1238 standard.

The term "melting temperature" refers to a peak melting temperature, i.e. the temperature at which a material undergoes transition from the solid to the liquid state. The melting temperature is preferably by differential scanning calorimetry (DSC) according to ISO 11357 standard using a heating rate of 2°C/min. The measurements can be performed with a Mettler Toledo DSC 3+ device and the T_{g} values can be determined from the measured DSC-curve with the help of the DSC-software. The term "melting point" may be used interchangeably with the term "melting temperature".

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one thermoplastic polymer" refers to the sum of the individual amounts of all thermoplastic polymers contained in the composition. Furthermore, in case the composition comprises 20 wt.-% of at least one thermoplastic polymer, the sum of the amounts of all thermoplastic polymers contained in the composition equals 20 wt.-%.

The term "room temperature" designates a temperature of 23°C.

The roofing membrane and the top waterproofing layer are preferably sheet-like elements having first and second major surfaces. The term "sheet-like element" refers in the present document to elements having a length and width at least 25 times, preferably at least 50 times, more preferably at least 150 times greater than the thickness of the element. The term "major surface" refers to the planar surfaces of a layer defining a thickness of said layer there between.

Substances that change their color as response to a change in temperature are known as thermochromic pigments. The temperature at which the change in color occurs is typically a temperature range and not a single temperature. Typically, the color of a thermochromic pigment starts to change ca. 4°C below the activation temperature of the thermochromic pigment. The change in color can either be irreversible or reversible. Irreversible pigments are suitable for one-time use providing evidence of attained temperature. The at least one thermochromic pigment **P** present in the top waterproofing layer is preferably a reversible pigment capable of changing its color back and forth as response to a change in temperature.

Both inorganic and organic thermochromic pigments are known. Inorganic pigments are less suitable for use in applications, in which the temperature change should occur at temperatures below 100°C. Organic thermochromic pigments are typically systems of interacting components containing one or more thermochromic dyes as color formers, weak organic acids acting as color developers, and solvents that variably interact with other components of the system. Organic thermochromic pigments are also preferred since they can undergo a reversible color change. Such pigments are typically colorless above at temperatures above the activation temperature and have a characteristic color at temperature below the activation temperature.

Thermochromic pigments are typically microencapsulated in a protective cover to protect the pigment from undesired effects from the environment. Each microcapsule is self-contained, having all of the components of the entire system required to reproduce the color change. At lower temperatures, i.e. at temperatures below the full color point, the solvent is solid and the thermochromic dye and the color developer interact. At this stage the thermochromic dye absorbs light in the visible wavelength and is thus colored The term "full color point" refers in the present disclosure to a temperature at which a thermochromic system has achieved maximum color density upon cooling and appears to gain no further color density if cooled to a lower temperature.

At elevated temperatures, i.e. near the activation temperature of the thermochromic system, the solvent starts to melt and the interaction between the color developer and the thermochromic dye is interrupted. At this stage the thermochromic dye undergoes a chemical transformation (such as deprotonation) that causes it to lose its color. The term "activation temperature" refers in the present disclosure to a temperature above which the thermochromic system has almost achieved its final clear or light color end point. The color starts to fade at approximately 4°C. below the activation temperature and will be in between colors within the activation temperature range. Generally, the activation temperature of a thermochromic pigment is defined as the temperature at which the human eye can perceive that the pigment is starting to lose its color, or alternatively, starting to gain color. When the heating is continued, the thermochromic system becomes increasingly unordered and continues to lose its color until it reaches a level of disorder at which the pigment lacks any recognizable color. The temperature at which the color of a thermochromic system is diminished to a minimal amount and at which it appears to lose no further color density upon further heating, is also known as a "clearing point".

Preferably, the at least one thermochromic pigment **TP** is present in the top waterproofing layer in form of solid particles, which are fully embedded into the top waterproofing layer. The term "fully embedded" is understood to mean that the particles are fully covered by the matrix of the top waterproofing layer. According to one or more embodiments, the particles of the at least one thermochromic pigment **TP** are distributed throughout the volume of the top waterproofing layer.

By the expression "distributed throughout the volume" is understood to mean that the particles of the at least one thermochromic pigment **TP** are present in essentially all portions of the top waterproofing layer but it does not necessarily imply that their distribution is uniform throughout the top waterproofing layer. It may, however, be preferable that the particles of the at least one thermochromic pigment **TP** are uniformly distributed throughout the volume of the top waterproofing layer. For a person skilled in the art it is clear that even if the particles of the at least one thermochromic pigment **TP** are uniformly distributed, there may be regions in the top waterproofing layer, which have a slightly higher concentration of the pigment than other regions and that a 100 % uniform distribution is generally not achievable.

According to one or more embodiments, the particles of the at least one thermochromic pigment dispersed in a continuous thermoplastic polymer phase comprising the at least one thermoplastic polymer **P**.

Preferably, the at least one thermochromic pigment **TP** is a thermochromic microencapsulated pigment comprising a thermochromic system enclosed in a microcapsule, preferably a polymeric shell. In these embodiments, the particles of the at least one thermochromic pigment **TP** comprise a microcapsule enclosing a thermochromic system. According to one or more preferred embodiments, the thermochromic system comprises at least one thermochromic dye, at least one color developer, and at least one solvent.

The detailed composition of the thermochromic system depends on the desired activation temperature of the thermochromic microencapsulated pigment and on whether the at least one thermochromic pigment **TP** is composed of a one single thermochromic microencapsulated pigment or of a mixture of two or more thermochromic microencapsulated pigments. According to one or more preferred embodiments, the at least one thermochromic dye is a leuco dye. Thermochromic systems comprising leuco dyes are preferred above all since they exhibit a reversible color change in a preferred range of temperatures.

According to one or more embodiments, the at least one thermochromic dye is selected from the group consisting of spirolactones, fluorans, spiropyrans, and fulgides. Particularly suitable thermochromic dyes to be used in the at least one thermochromic pigment **TP** are based, for example, on diphenylmethane phthalide derivatives, phenylindolylphthalide derivatives, indolylphthalide derivatives, diphenylmethane azaphthalide derivatives, phenylindolylazaphthalide derivatives, fluoran derivatives, styrynoquinoline derivatives, and diaza-rhodamine lactone derivatives.

According to one or more embodiments, the at least one thermochromic pigment **TP** comprises at least one microencapsulated thermochromic pigment, wherein the at least one thermochromic dye contained in the thermochromic system of the at least one microencapsulated thermochromic pigment is a fluoran derivative, such as 3-diethylamino-6-methyl-7-phenylaminofluoran. These types of thermochromic dyes are chromatic organic compounds having a black or dark color below their activation temperature.

Suitable color developers include, in particular, weak acids, which act as proton donors, changing the color of the thermochromic dye between its leuco form and its protonated colored form. Strong acids are not preferred since use of them renders the color change irreversible, which is not desired in the context of the present invention. Suitable color developers to be used in the thermochromic system are disclosed, for example, in a published international patent application WO 2015/048536 A1 in the paragraph "Developers".

Suitable solvents to be used in the thermochromic system include, in particular solvents having a relatively large molecular weight and which are relatively nonpolar. Suitable solvents and co-solvents include, for example, aldehydes, thiols, sulfides, ethers, ketones, esters, alcohols, and acid amides. These can be used alone or as mixtures of at least two different solvents. Suitable solvents to be used in the thermochromic system are disclosed, for example, in a published international patent application WO 2015/048536 A1 in the paragraph "Solvents for the Internal Phase".

Microencapsulated thermochromic pigments can be obtained by providing a formulation comprising the components of the thermochromatic system and encapsulating the formulation within a polymeric shell.

Suitable techniques for the encapsulation of the thermochromatic system include, for example, interfacial polymerization process processes. During the interfacial polymerization, the internal phase (material inside the capsule), external phase (shell material of the capsule) and water are mixed with each other and homogenized using a high-speed mixing means. By controlling the temperature of mixing, pH, concentrations of components, and the mixing speed, the external phase will surround the internal phase upon crosslinking with itself. The average size (diameter) of the thus obtained capsules is typically in the range of 1 - 10 µm, such as 3 - 5 µm.

Further exemplary techniques for the encapsulation of the thermochromic system include, for example, physical encapsulation means, such as pan coating, air suspension coating, centrifugal extrusion, vibration nozzle, and spray drying. Further examples of chemical encapsulation techniques include but are not limited to in-situ polymerization and matrix polymerization. Suitable polymers used as materials for the capsules include but are not limited to polyester, polyurethane, polyureas, urea-formaldehyde, epoxy, melamine-formaldehyde, polyethylene, polyisocyanates, polystyrene, polyamides, and polysilanes.

Suitable microencapsulated thermochromic pigments are commercially available, for example, from BDH Ltd, FX Pigments, QCR Solutions Corp, and Solar Color Dust.

The amount of the at least one thermochromic pigment **TP** in the top waterproofing layer is not particularly restricted. However, the preferred amount of the at least one thermochromic pigment **TP** corresponds to the minimum amount required to obtain a top waterproofing layer having sufficiently dark color at temperatures corresponding to the full color point of the pigment. Minimizing the use of the thermochromic pigment is preferred from economical point of view since the pigments are more expensive compared to the other constituents of the top waterproofing layer. In addition, it has been found out those waterproofing layers containing high amounts of thermochromic pigments are more difficult produce without significant degradation of the pigment during the production process.

Preferably, the at least one thermochromic pigment **TP** comprises at least 0.1 wt.-%, more preferably at least 0.25 wt.-%, even more preferably at least 0.35 wt.-%, most preferably at least 0.4 wt.-% of the total weight of the top waterproofing layer. Top waterproofing layers containing the at least one thermochromic pigment **TP** in an amount falling within the above cited ranges have been found to exhibit a sufficiently dark color at temperatures below the activation temperature of the thermochromic pigment. According to one or more embodiments, the at least one thermochromic pigment **TP** comprises not more than 20 wt.-%, preferably not more than 15 wt.-%, more preferably not more than 10 wt.-%, even more preferably not more than 7.5 wt.-%, in particular not more than 5 wt.-%, such as not more than 2.5 wt.-% of the total weight of the top waterproofing layer.

According to one or more further embodiments, the at least one thermochromic pigment **TP** comprises 0.1 - 10 wt.-%, preferably 0.15 - 7.5 wt.-%, more preferably 0.25 - 5 wt.-%, even more preferably 0.3 - 2.5 wt.-%, most preferably 0.3 - 1.5 wt.-%, of the total weight of the top waterproofing layer.

The activation temperature of the at least one thermochromic pigment **TP** is preferably selected such that the top waterproofing layer starts to lose its color when the ambient temperature approaches the interior temperature of the building. Consequently, the activation temperature of the at least one thermochromic pigment **TP** is preferably at or above 18°C, more preferably at or above 20°C, even more preferably at or above 23°C. According to one or more embodiments, the at least one thermochromic pigment **TP** has an activation temperature in the range of 18 - 40°C, preferably 20 - 38°C, more preferably 21 - 35°C, more preferably 21 - 32°C, most preferably 22 - 30°C.

The particle size of the at least one thermochromic pigment is not particularly restricted. It may be preferable that the at least one thermochromic pigment has a median particle size dso of not more than 15 µm, preferably not more than 10 µm. According to one or more embodiments, the at least one thermochromic pigment has a median particle size dso in the range of 0.5 - 10 µm, preferably 1 - 7.5 µm, more preferably 1.25 - 5 µm. The median particle size dso refers to a particle size below which 50 % of all particles by volume are smaller than the dso value. The term "particle size" refers in the present document to the area-equivalent spherical diameter of a particle. The particle size distribution can be determined by sieve analysis according to the method as described in ASTM C136/C136M -14 standard ("Standard Test Method for Sieve Analysis of Fine and Coarse Aggregates).

Ideally, the top waterproofing layer would have a low reflectance for electromagnetic radiation in infrared wavelength range in cold climatic conditions, when the buildings have to be heated and a high reflectance for electromagnetic radiation in infrared wavelength range in warm climatic conditions, when the buildings have to be cooled. The term "infrared wavelength range" is understood to mean electromagnetic radiation having a wavelength in the range of 700 - 2'500 nm, in particular 700 - 1'050 nm. The term "reflectance" refers to percentage of electromagnetic radiation at normal incidence that is reflected back to the observer from the surface of the top layer at a specified wavelength of the electromagnetic radiation.

According to one or more embodiments, the top layer has a reflectance of not more than 45%, preferably not more than 40%, more preferably not more than 35% for electromagnetic radiation in the infrared wavelength range, when the temperature of the top layer is not more than 35°C, preferably not more than 30°C, more preferably not more than 25°C, most preferably not more than 20°C and/or a reflectance of at least 50%, preferably at least 55%, more preferably at least 60% for electromagnetic radiation in the infrared wavelength, when the temperature of the top layer above 35°C, preferably above 30°C, more preferably above 25°C, most preferably above 20°C.

The top waterproofing layer further comprises at least one UV-light absorber **A**. This component are added to the top waterproofing layer to ensure that the at least one thermochromic pigment **TP** preserves its color changing properties despite of being exposed to intensive UV-radiation during the service life of the roofing membrane.

According to one or more embodiments, the at least one UV-light absorber **A** comprises 0.5 - 15.0 wt.-%, preferably 0.5 - 10.0 wt.-%, more preferably 1.0 - 7.5 wt.-%, even more preferably 1.0 - 5.0 wt.-%, most preferably 1.25 - 3.5 wt.-%, of the total weight of the top waterproofing layer. The inventors of the present invention have surprisingly found out that the use of the at least one UV-light absorber **A** in amounts falling within the above cited ranges enables provision of thermochromatic roofing membranes, which can withstand 1000+, preferably 2000+ hours in the accelerated weathering testing (QUV) without losing their color changing abilities.

Suitable UV-light absorbers to be used in the top waterproofing layer include, for example, benzotriazole-, benzophenone, phenyl triazine-, and oxamide-based UV-absorbers, in particular hydroxyphenylbenzotriazoles, hydroxybenzophenones, hydroxyphenyltriazines, oxanilides, and oxamides.

According to one or more embodiments, the at least one UV-light absorber A is selected from the group consisting of 2-(2'-hydroxyphenyl)benzotriazole, 2-(2-hydroxy-5-methylphenyl)-2H-benzotriazole, 2-hydroxy-4-octyloxybenzophenone, and 2-(2-hydroxyphenyl)-1,3,5-triazine.

Suitable UV-light absorbers are commercially available, for example, under the trade name of Tinuvin® (from Ciba Specialty Chemicals), such as Tinuvin® 213, 234, 320, 326-329, 350, 360, and 571.

According to one or more embodiments, the top waterproofing layer further comprises at least one UV-light stabilizer **S**.

The at least one UV-light stabilizer, if used, preferably comprises at least 0.25 wt.-%, more preferably at least 0.75 wt.-%, even more preferably at least 1.5 wt.-%, most preferably at least 2.0 wt.-%, of the total weight of the top waterproofing layer. According to one or more embodiments, the at least one UV-light stabilizer **S** comprises 0.35 - 15.0 wt.-%, preferably 0.5 - 10.0 wt.-%, more preferably 1.0 - 7.5 wt.-%, even more preferably 1.5 - 7.5 wt.-%, most preferably 2.0 - 5.0 wt.-% of the total weight of the top waterproofing layer.

According to one or more embodiments, the at least one UV-light stabilizer comprises at least one hindered amine light stabilizer (HALS).

Suitable hindered amine light stabilizers (HALS) include, for example, bis (2,2,6,6-tetramethylpiperidyl)-sebacate; bis-5(1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylenediamine and 4-tert-octylamino-2,6-dichloro-1,3,5-s-triazine; tris-(2,2,6,6-tetramethylpiperidyl)-nitrilotriacetate; tetrakis-(2,2,6,6-tetramethyl-4-piperidyl)-1,2,3,4-butane-tetra-arbonic acid; and 1,1'(1,2-ethanediyl)-bis-(3,3,5,5-tetramethylpiperazinone).

Suitable hindered amine light stabilizers are commercially available, for example, under the trade name of Tinuvin® (from Ciba Specialty Chemicals), such as Tinuvin® 371, Tinuvin® 622, and Tinuvin® 770; under the trade name of Chimassorb® (from Ciba Specialty Chemicals), such as Chimassorb® 119, Chimassorb® 944, Chimassorb® 2020; and under the trade name of Cyasorb® (from Cytec Industries), such as Cyasorb® UV 3346, Cyasorb® UV 3529, Cyasorb® UV 4801, and Cyasorb® UV 4802.

According to one or more embodiments, the top waterproofing layer comprises both the at least one UV-light absorber **A** and the at least one UV-light stabilizer **S**, wherein the weight ratio of the amount of the at least one UV-light absorber **A** to the amount of the at least one UV-light stabilizer **S** is in the range of from 0.2:1 to 10:1, preferably from 0.5:1 to 5:1, more preferably from 1:1 to 5:1, even more preferably 1:1 to 3:1.

According to one or more embodiments, the roofing membrane further comprises a layer of fiber material covering at least portion of the second major surface of the top waterproofing layer. The layer of fiber material is present in the roofing membrane mainly to ensure the mechanical stability of the top waterproofing layer when the roofing membrane is exposed to varying environmental conditions, in particular to large temperature fluctuations.

The term "fiber material" designates in the present document materials composed of fibers comprising or consisting of, for example, organic, inorganic or synthetic organic materials. Examples of organic fibers include, for example, cellulose fibers, cotton fibers, and protein fibers. Particularly suitable synthetic organic materials include, for example, polyester, homopolymers and copolymers of ethylene and/or propylene, viscose, nylon, and polyamides. Fiber materials composed of inorganic fibers are also suitable, in particular, those composed of metal fibers or mineral fibers, such as glass fibers, aramid fibers, wollastonite fibers, and carbon fibers. Inorganic fibers, which have been surface treated, for example, with silanes, may also be suitable. The fiber material can comprise short fibers, long fibers, spun fibers (yarns), or filaments. The fibers can be aligned or drawn fibers. It may also be advantageous that the fiber material is composed of different types of fibers, both in terms of geometry and composition.

Preferably, the layer of fiber material is selected from the group consisting of non-woven fabrics, woven fabrics, and non-woven scrims. The term "non-woven fabric" designates in the present document materials composed of fibers, which are bonded together by using chemical, mechanical, or thermal bonding means, and which are neither woven nor knitted. Non-woven fabrics can be produced, for example, by using a carding or needle punching process, in which the fibers are mechanically entangled to obtain the nonwoven fabric. In chemical bonding, chemical binders such as adhesive materials are used to hold the fibers together in a non-woven fabric.

The term "non-woven scrim" designates in the present document web-like non-woven products composed of yarns, which lay on top of each other and are bonded to each other by using chemical or thermal bonding means. Typical materials for non-woven scrims include metals, fiberglass, and plastics, in particular polyester, polypropylene, polyethylene, and polyethylene terephthalate (PET).

According to one or more embodiments, the layer of fiber material is a non-woven fabric, preferably a non-woven fabric having a mass per unit weight of not more than 350 g/m², more preferably not more than 300 g/m². According one or more embodiments, the layer of fiber material is a non-woven fabric having a mass per unit weight of 15 - 300 g/m², preferably 25 - 200 g/m², more preferably 35 - 150 g/m², even more preferably 40 - 100 g/m².

Preferably, the non-woven fabric comprises synthetic organic and/or inorganic fibers. Particularly suitable synthetic organic fibers for the non-woven fabric include polyester fibers, polypropylene fibers, polyethylene fibers, nylon fibers, and polyamide fibers. Particularly suitable inorganic fibers for the non-woven fabric include glass fibers, aramid fibers, wollastonite fibers, and carbon fibers.

According to one or more embodiments, the non-woven fabric is composed of synthetic organic fibers, preferably selected from the group consisting of polyester fibers, polypropylene fibers, polyethylene fibers, nylon fibers, and polyamide fibers. According to one or more further embodiments, the non-woven fabric is composed of inorganic fibers, preferably selected from the group consisting of glass fibers, aramid fibers, wollastonite fibers, and carbon fibers, more preferably glass fibers.

It may be preferable that the layer of fiber material covers at least 50%, more preferably at least 65%, most preferably at least 75% of the area of the second major surface of the top waterproofing layer. It may furthermore be preferable that the layer of fiber material and the top waterproofing layer have substantially same width and length and that the layer of fiber material covers substantially the entire area of the second major surface of the top waterproofing layer. The term "substantially entire area" is understood to mean at least 85%, preferably at least 90%, more preferably at least 95% of the area of the layer.

The layer of fiber material and the top waterproofing layer can be directly or indirectly adhered to each other. The layer of fiber material and the top waterproofing layer can be indirectly adhered to each other, for example, via a layer of adhesive.

According to one or more embodiments, the layer of fiber material has been thermally laminated to the second major surface of the top waterproofing layer. The term "thermal lamination" refers in the present disclosure to a process, in which the layers are bonded to each by the application of thermal energy. It may furthermore be preferable that the layer of fiber material is partially embedded into the top waterproofing layer. The expression "partially embedded" is understood to mean that portion of the fibers contained in the layer of fiber material are embedded into the top waterproofing layer, i.e. covered by the matrix of the top waterproofing layer whereas other portion of the fibers are not embedded into the top waterproofing layer.

According to one or more further embodiments, the layer of fiber material is indirectly adhered to the second major surface of the top waterproofing layer via a layer of adhesive. The type of adhesive used for bonding of the layer of fiber material to the top waterproofing layer is not particularly restricted. Suitable adhesives include, for example, one-component and two-component reactive adhesives, in particular those based on polyurethanes and epoxides, as well as hot-melt adhesives, pressure sensitive adhesives, and solvent- and water-based dispersion adhesives.

The thickness of the top waterproofing layer is not particularly restricted. It may be preferable that the top waterproofing layer has a thickness determined by using the measurement method as defined in DIN EN 1849-2 standard of 0.15 - 5.0 mm, preferably 0.25 - 3.0 mm, more preferably 0.35 - 2.5 mm, even more preferably 0.40 - 2.0 mm, most preferably 0.5 - 2.0 mm.

The type of the at least one polymer component contained in the top waterproofing layer is not particularly restricted. However, the top waterproofing layer should be as waterproof as possible and not to decompose or be mechanically damaged even under prolonged influence of water or moisture. On the other hand, the composition of the top waterproofing layer should be selected such that the roofing membrane fulfils the general requirements for roofing membranes, in particular the general requirements as defined in DIN 20000-201:2015-08 standard.

It may, for example, be preferred that the roofing membrane shows an impact resistance measured according to EN 12691: 2005 standard in the range of 200 - 1500 mm and/or a longitudinal and a transversal tensile strength measured at a temperature of 23°C according to DIN ISO 527-3 standard of at least 5 MPa and/or a longitudinal and transversal elongation at break measured at a temperature of 23°C according to DIN ISO 527-3 standard of at least 300% and/or a water resistance measured according to EN 1928 B standard of 0.6 bar for 24 hours and/or a maximum tear strength measured according to EN 12310-2 standard of at least 100 N.

According to one or more embodiments, the at least one thermoplastic polymer **TP** is selected from the group consisting of propylene - ethylene copolymers, propylene - α-olefin copolymers, polypropylene homopolymers (PP), ethylene - α-olefin copolymers, polyethylene homopolymers (PE), ethylene - vinyl acetate copolymer (EVA), ethylene - acrylic ester copolymers, polyvinylchloride (PVC), polyethylene terephthalate (PET), polystyrene (PS), polyamides (PA), chlorosulfonated polyethylene (CSPE), ethylene propylene diene rubber (EPDM), and polyisobutylene (PIB).

According to one or more further embodiments, the at least one thermoplastic polymer **TP** is selected from the group consisting of propylene - ethylene copolymers, propylene - α-olefin copolymers, polypropylene homopolymers (PP), ethylene - α-olefin copolymers, polyethylene homopolymers, ethylene - vinyl acetate copolymer, and polyvinylchloride.

According to one or more embodiments, the at least one thermoplastic polymer **TP** is polyvinylchloride. Suitable polyvinyl chlorides include those produced by suspension polymerization (also referred to as S-PVC) as well as those produced by emulsion polymerization (also referred to as E-PVC).

It may be preferable that the at least one thermoplastic polymer **TP** comprises at least 15 wt.-%, more preferably at least 25 wt.-%, most preferably at least 35 wt.-% of the total weight of the top waterproofing layer. According to one or more embodiments, the at least one thermoplastic polymer **TP** comprises at least 50 wt.-%, preferably at least 60 wt.-%, more preferably at least 70 wt.-%, most preferably at least 85 wt.-% of the total weight of the top waterproofing layer. According to one or more further embodiments, the at least one thermoplastic polymer **TP** comprises 50 - 90 wt.-%, preferably 60 - 85 wt.-% more preferably 65 - 85 wt.-%, even more preferably 65 - 80 wt.-% of the total weight of the top waterproofing layer.

According to one or more embodiments, the top waterproofing layer (2) further comprises at least one white color pigment, preferably titanium dioxide. The presence of the at least one white color pigment is preferred in order to provide a top waterproofing layer having a high reflectance for electromagnetic radiation in the infrared wavelength at temperatures above the activation temperature of the at least one thermochromic pigment **TP**. Preferably, the at least one white color pigment, preferably titanium dioxide, is present in the top waterproofing layer in an amount of at least 0.5 wt.-%, more preferably at least 1.5 wt.-%, even more preferably at least 2.5 wt.-%, based on the total weight of the waterproofing layer. According to one or more embodiments, the top waterproofing layer comprises 0.5 - 15 wt.-%, preferably 1.0 - 10 wt.-%, more preferably 1.5 - 7.5 wt.-%, based on the total weight of the top waterproofing layer, of the at least one white color pigment, preferably titanium dioxide.

The top waterproofing layer may further comprise at least one inert mineral filler. The term "inert mineral filler" designates in the present disclosure mineral fillers, which, unlike mineral binders, do not undergo a hydration reaction in the presence of water. Suitable inert mineral fillers include, for example, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites. The at least one inert mineral filler is preferably present in the top waterproofing layer in form of finely divided particles, preferably having a median particle size dso of not more than 100 µm, more preferably not more than 50 µm, even more preferably not more than 25 µm.

It is furthermore preferred that the top waterproofing layer is essentially free of water-swellable mineral fillers. The expression "essentially free of" is understood to mean that the amount of the respective compounds is less than 1.0 wt.-%, preferably less than 0.5 wt.-%, more preferably less than 0.25 wt.-%, based on the total weight of the composition. The term "water-swellable mineral fillers" refers in the present disclosure to mineral fillers that are capable of swelling upon contact with water, i.e. mineral fillers that swell in the presence of water. Examples of water-swellable mineral fillers include, in particular, water-swellable clays, such as montmorillonite clays, for example calcium montmorillonite, sodium montmorillonite, calcium bentonite, and sodium bentonite.

The top waterproofing layer can further comprise, auxiliary components, for example, heat stabilizers, antioxidants, plasticizers, flame retardants, matting agents, antistatic agents, impact modifiers, biocides, and processing aids such as lubricants, slip agents, antiblock agents, and denest aids. The total amount of these auxiliary components is preferably not more than 40 wt.-%, more preferably not more than 35 wt.-%, most preferably not more than 25 wt.-%, based on the total weight of the top waterproofing layer.

According to one or more embodiments, the roofing membrane further comprises a bottom waterproofing layer having a first and a second major surface, wherein the top and bottom waterproofing layers are indirectly or directly connected to each other over at least part of their opposing major surfaces.

The expression "directly connected" is understood to mean in the context of the present invention that no further layer or substance is present between the layers, and that the opposing surfaces of the layers are directly bonded to each other or adhere to each other. At the transition area between the two layers, the materials of the layers can also be present mixed with each other. The top layer and the bottom layer can be indirectly connected to each other, for example, via a connecting layer, such as a layer of adhesive or a layer of fiber material, or a combination thereof. In case a porous connecting layer, such as an open weave fabric, the top waterproofing layer may be partially directly connected and partially indirectly connected to the bottom waterproofing layer.

The composition of the bottom waterproofing layer is not particularly restricted. However, the bottom waterproofing layer should be as waterproof as possible and not to decompose or be mechanically damaged even under prolonged influence of water or moisture. On the other hand, the composition of the bottom waterproofing layer should be selected such that the roofing membrane fulfils the general requirements for roofing membranes, in particular the general requirements as defined in DIN 20000-201:2015-08 standard.

According to one or more embodiments, the bottom waterproofing layer comprises at least one thermoplastic polymer, preferably selected from the group consisting of propylene - ethylene copolymers, propylene - α-olefin copolymers, polypropylene homopolymers (PP), ethylene - α-olefin copolymers, polyethylene homopolymers (PE), ethylene - vinyl acetate copolymer (EVA), ethylene - acrylic ester copolymers, polyvinylchloride (PVC), polyethylene terephthalate (PET), polystyrene (PS), polyamides (PA), chlorosulfonated polyethylene (CSPE), ethylene propylene diene rubber (EPDM), and polyisobutylene (PIB).

According to one or more embodiments, the at least one thermoplastic polymer is selected from the group consisting of propylene - ethylene copolymers, propylene - α-olefin copolymers, polypropylene homopolymers (PP), ethylene - α-olefin copolymers, polyethylene homopolymers, ethylene - vinyl acetate copolymer, and polyvinylchloride. According to one or more embodiments, the at least one thermoplastic polymer is polyvinylchloride. It may be preferred that the top and bottom waterproofing layers have identical compositions.

According to one or more embodiments, the at least one thermoplastic polymer comprises at least 50 wt.-%, preferably at least 60 wt.-%, more preferably at least 70 wt.-%, most preferably at least 85 wt.-% of the total weight of the bottom waterproofing layer. According to one or more further embodiments, the at least one polymer comprises 50 - 90 wt.-%, preferably 60 - 85 wt.-% more preferably 65 - 85 wt.-%, even more preferably 65 - 80 wt.-% of the total weight of the bottom waterproofing layer.

The bottom waterproofing layer can comprise, in addition to the at least one polymer, auxiliary components, for example, heat stabilizers, antioxidants, plasticizers, flame retardants, color pigments, fillers, matting agents, antistatic agents, impact modifiers, biocides, and processing aids such as lubricants, slip agents, antiblock agents, and denest aids. The total amount of these auxiliary components is preferably not more than 45 wt.-%, more preferably not more than 35 wt.-%, most preferably not more than 25 wt.-%, based on the total weight of the bottom waterproofing layer.

The thickness of the bottom waterproofing layer is not particularly restricted. It may be preferable that the bottom waterproofing layer has a thickness determined by using the measurement method as defined in DIN EN 1849-2 standard of 0.15-5.0 mm, preferably 0.25 - 3.5 mm, even more preferably 0.35 - 2.5 mm, most preferably 0.45 - 2.0 mm

It can furthermore be advantageous that the roofing membrane comprises a top-coating covering at least portion of the first major surface of the top waterproofing layer. The top-coating may be used to provide additional protection for the at least one thermochromic pigment against the degrading effect of UV-radiation. According to one or more embodiments, the top coating has a transmissivity of at least 50%, preferably at least 55%, more preferably at least 65%, most preferably at least 75% for electromagnetic radiation in the infrared wavelength range.

Preferably, the top-coating comprises at least one UV-light stabilizer and/or at least one UV-light absorber. In addition, the top-coating may comprise further additives, such as heat stabilizers, antioxidants, plasticizers, flame retardants, matting agents, antistatic agents, impact modifiers, biocides, and processing aids such as lubricants, slip agents, antiblock agents, and denest aids.

According to one or more embodiments, the top-coating has a thickness determined by using the measurement method as defined in DIN EN 1849-2 standard of 10 - 250 µm, preferably 15 - 150 µm, even more preferably 25 - 100 µm, most preferably 30 - 75 µm.

The roofing membrane of the present invention is typically provided in a form of a prefabricated membrane article, which is delivered to the construction site and unwound from rolls to provide sheets having a width of 1 - 5 m and length of several times the width. However, the roofing membrane can also be used in the form of strips having a width of typically 1 - 20 cm, for example so as to seal joints between two adjacent membranes. Moreover, the roofing membrane can also be provided in the form of planar bodies, which are used for repairing damaged locations in existing adhered roofing systems.

The preferences given above for the roofing membrane, the top and bottom waterproofing layers, the layer of fiber material, and the top-coating apply equally to all aspects of the present invention unless otherwise stated.

Another subject of the present invention is a method for producing a roofing membrane according to the present invention, the method comprising extruding, calendaring, compressing, or casting a melt-processed composition of the top waterproofing layer.

The melt-processed composition of the top waterproofing layer can be obtained by melt-processing a starting composition comprising the components of the top waterproofing layer using a suitable mixing apparatus. The melt-processing is preferably conducted at a temperature, which is above the melting point of the at least one thermoplastic polymer **TP**, or in case the starting composition comprises more than one thermoplastic polymers, at a temperature, which is above the melting point of the thermoplastic polymer having the highest melting point. The melt-processing can be conducted as a batch process using any conventional mixer, such as a Brabender, Banbury, or roll mixer or as continuous process using a continuous type mixer, preferably an extruder, such as a single screw or a twin screw extruder.

Some or all of the components of the starting composition can also be first mixed without melting to obtain a dry blend, which is then melt-processed as explained above. The components of the starting composition can also be first mixed in a compounding extruder to produce pellets or granulates, which are then melt-processed, for example in an extruder.

The further details of the method for producing the roofing membrane depend on the embodiment of the roofing membrane, in particular whether the membrane is a singly-ply membrane comprising a top waterproofing layer or a multi-ply membrane comprising a top and a bottom waterproofing layers.

According to one or more embodiments, the roofing membrane comprises a top waterproofing layer having a first and a second major surface and a layer of fiber material covering at least portion of the second major surface of the top waterproofing layer, wherein the method comprises steps of:
i) Extruding a melt-processed composition of the top waterproofing layer through an extruder die on a surface of the layer of fiber material to form a fiber layer-backed top waterproofing layer and
ii) Optionally employing spaced apart calender cooling rolls through which the fiber layer-backed top waterproofing layer obtained in step i) is drawn.

The melt-processed composition of the top waterproofing layer is preferably obtained by melt-processing a starting composition comprising the components of the top waterproofing layer in an extruder. Suitable extrusion apparatuses comprising at least one extruder and an extruder die are well known to a person skilled in the art. Any conventional extruders, for example, a ram extruder, single screw extruder, or a twin-screw extruder may be used. Preferably, the extruder is a screw extruder, more preferably a twin- screw extruder.

According to one or more further embodiments, the roofing membrane comprises a top waterproofing layer having a first and a second major surface, a layer of fiber material covering at least portion of the second major surface of the waterproofing top layer, and a bottom waterproofing layer having a first and a second major surface, wherein the method comprises steps of:
i) Extruding a melt-processed composition of the top waterproofing layer through an extruder die on a surface of the layer of fiber material to form a fiber layer-backed top waterproofing layer,
ii) Extruding a melt-processed composition of the bottom waterproofing layer through an extruder die on an exterior surface of the layer of fiber material facing away from the top waterproofing layer to form a composite membrane, and
iii) Optionally employing spaced apart calender cooling rolls through which the composite membrane obtained in step ii) is drawn.

Still another subject of the present invention is a method for covering a roof substrate comprising steps of:
I. Applying two or more roofing membranes according to the present invention on surface of the roof substrate to be covered,
II. Overlapping adjoining roofing membranes along the length and/or width of the roofing membranes,
III. Bonding the opposing surfaces of the overlapped portions to each other to provide acceptable seam strength by heat-welding or by adhesive bonding.

According to one or more embodiments, the roof substrate is selected from the group consisting of an insulation board, a cover board, and an existing roofing membrane.

### Detailed description of the Drawings

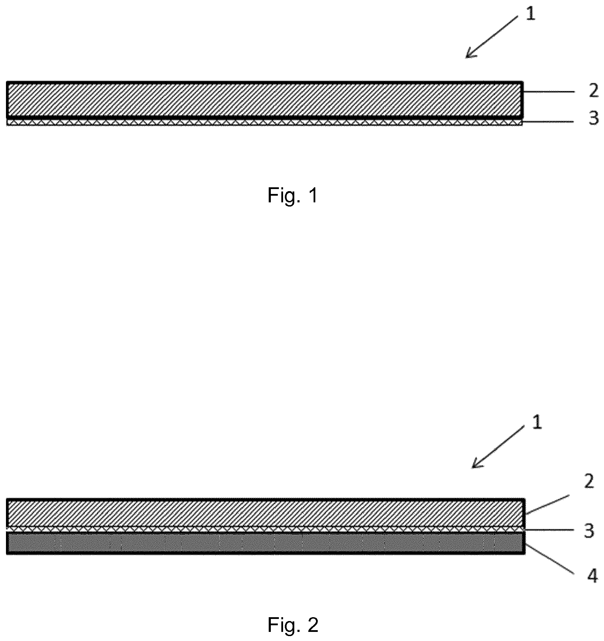

Fig. 1 shows a cross-section of a roofing membrane (1) comprising a top waterproofing layer (2) and a layer of fiber material (3) covering the second major surface of the top waterproofing layer (2). In this embodiment, the layer of fiber material (3) covers substantially the entire area of the second major surface of the top waterproofing layer (2).

Fig. 2 shows a cross-section of a roofing membrane (1) according to one embodiment of the roofing membrane presented in Fig. 1. In this embodiment, roofing membrane (1) comprises a top waterproofing layer (2), a layer of fiber material (3) covering substantially the entire area of the second major surface of the top waterproofing layer (2), and a bottom layer (4), wherein the layer of fiber material (3) is positioned between the top and the bottom waterproofing layers (2, 4).

### Examples

The followings compounds and products shown in Table 1 were used in the examples:

**Table 1**

| Thermochromic pigment | Thermal Dust®-Black, activation temperature ca. 30 °C | Solar Color Dust |
|---|---|---|
| UV-light absorber | Tinuvin® 326 | Ciba Chemicals |
| UV-light stabilizer | Tinuvin® 371 | Ciba Chemicals |
| PVC dry blend | | Sika USA |

### Preparation of thermochromic membranes

PVC-membrane samples having the compositions as shown in Table 2 were produced using a Labtech two-roll mill and a heated press.

The thermochromic pigment, a previously prepared PVC dry blend, the UV-light absorber, and/or the UV-light stabilizer fed into the two-roll mill and melt-processed to obtain a homogenized melt, which was pressed into sheets having dimensions of 20 cm x 20 cm x 1.5 mm (length, width, thickness).

### UV-stability of thermochromic membranes

The UV-stability of the produced membrane samples was tested by treating the samples in a QUV accelerated weathering tester at 0.77 W/m²/nm irradiant at a temperature of 70°C for a specific period of time. After the aging treatment, the sample membrane was removed from the QUV and the color was measured while the membrane sample was still hot using a colorimeter (hot color) and at a temperature of -40°C (cold color). After measuring the color, the sample membrane was placed back to the QUV. The first color measurement was conducted after 689 hours or 167 hours of aging treatment. The L* values in Table 2 refer to the color lightness value measured with the colorimeter.

**Table 2**

| **Composition, wt.-%** | **Ref-1** | **Ex-1** | **Ex-2** | **Ex-3** | **Ex-4** | | **Ex-5** | **Ex-6** |
|---|---|---|---|---|---|---|---|---|
| PVC dry blend | 99.63 | 98.59 | 97.58 | 95.62 | 91.92 | | 98.88 | 98.40 |
| Thermochromic pigment | 0.37 | 0.37 | 0.38 | 0.38 | 0.38 | | 0.38 | 0.37 |
| UV-absorber | 0.00 | 0.64 | 1.28 | 2.50 | 4.80 | | 0.00 | 1.23 |
| UV-stabilizer | 0.00 | 0.39 | 0.77 | 1.50 | 2.89 | | 0.74 | 0.00 |
| Tot | 100.00 | 100.00 | 100.00 | 100.00 | 100.00 | | 100.00 | 100.00 |

| **QUV testing** | | | | | | | | |
|---|---|---|---|---|---|---|---|---|
| *L*, hot* | | | | | | | | |
| 0 hours | 83.68 | 82 | 82.11 | 82.34 | 79.99 | 0 hours | 76.93 | 76.82 |
| 689 hours | 53.9 | 78.49 | 79.61 | 78.26 | 79.58 | 167 hours | 71.13 | 73.96 |
| 839 hours | 50.41 | 76.05 | 78.13 | 79.31 | 78.01 | 360 hours | 73.08 | 78.71 |
| 1024 hours | 47.12 | 75.13 | 78.44 | 78.07 | 75.7 | 884 hours | 57.68 | 75.76 |
| 1458 hours | 44.09 | 75.36 | 74.71 | 74.82 | 76.17 | 1373 hours | 39.44 | 72.93 |
| 1769 hours | 38.49 | 74.2 | 76.48 | 75.47 | 76.91 | 1871 hours | 35.82 | 71.99 |
| 2177 hours | 34.2 | 74.99 | 75.32 | 75.26 | 75.82 | 2352 hours | - | 73.89 |
| 2498 hours | 34.12 | 74.48 | 74.8 | 74.55 | 74.97 | | | |

| *L*, cold* | | | | | | | | |
|---|---|---|---|---|---|---|---|---|
| 0 hours | 55.92 | 55.66 | 55.04 | 54.42 | 55.29 | 0 hours | 48.41 | 48.96 |
| 689 hours | 50.51 | 58.39 | 56.09 | 54.99 | 58.56 | 167 hours | 64.72 | 47.78 |
| 839 hours | 48.13 | 58.31 | 56.05 | 54.79 | 57.89 | 360 hours | 68.02 | 50.49 |
| 1024 hours | 45.21 | 59.27 | 57 | 55.16 | 59.43 | 884 hours | 53.66 | 52.64 |
| 1458 hours | 40.47 | 61.3 | 58.42 | 56.55 | 57.88 | 1373 hours | 39.59 | 58.44 |
| 1769 hours | 37.01 | 63.53 | 61.23 | 57.45 | 58.68 | 1871 hours | 36.84 | 62.34 |
| 2177 hours | 34.55 | 67.29 | 64.43 | 62.59 | 62.56 | 2352 hours | | 64.41 |
| 2498 hours | 35.42 | 68.27 | 67 | 65.21 | 65.61 | | | |

## Claims

1. A roofing membrane (1) comprising a top waterproofing layer (2) having a first and a second major surface and optionally a layer of fiber material (3) covering at least portion of the second major surface of the top waterproofing layer (2), wherein the top waterproofing layer (2) comprises:
a) At least one thermoplastic polymer **P**,
b) At least one thermochromic pigment **TP**, and
c) At least one UV-light absorber **A**.

2. The roofing membrane (1) according to claim 1, wherein the at least one thermochromic pigment **TP** is present in the top waterproofing layer (2) in form of solid particles, which are fully embedded into the top waterproofing layer (2).

3. The roofing membrane (1) according to claim 1 or 2, wherein the at least one thermochromic pigment **TP** is a thermochromic microencapsulated pigment comprising a thermochromic system enclosed in a microcapsule, wherein the thermochromic system comprises at least one thermochromic dye, at least one color developer, and at least one solvent.

4. The roofing membrane according to claim 3, wherein the at least one thermochromic dye is selected from the group consisting of spirolactones, fluorans, spiropyrans, and fulgides.

5. The roofing membrane (1) according to any of previous claims, wherein the at least one thermochromic pigment **TP** comprises at least 0.25 wt.-%, preferably at least 0.35 wt.-% of the total weight of the top waterproofing layer (2) and/or wherein the at least one thermochromic pigment **TP** has an activation temperature in the range of 18 - 40°C, preferably 20 - 38°C.

6. The roofing membrane (1) according to any of previous claims, wherein the top waterproofing layer (2) has a reflectance of not more than 45%, preferably not more than 40% for electromagnetic radiation in the infrared wavelength range, when the temperature of the top waterproofing layer (2) is not more than 35°C, preferably not more than 30°C and/or a reflectance of at least 50%, preferably at least 55% for electromagnetic radiation in the infrared wavelength range, when the temperature of the top waterproofing layer (2) is above 35°C, preferably above 30°C.

7. The roofing membrane (1) according to any of previous claims, wherein the at least one UV-light absorber **A** comprises 0.5 - 15.0 wt.-%, preferably 0.5 - 10.0 wt.-%, of the total weight of the top waterproofing layer (2) and/or wherein the at least one UV-light absorber **A** is selected from the group consisting of 2-(2'-hydroxyphenyl)benzotriazole, 2-(2-hydroxy-5-methylphenyl)-2H-benzotriazole, 2-hydroxy-4-octyloxybenzophenone, and 2-(2-hydroxyphenyl)-1,3,5-triazine.

8. The roofing membrane (1) according to any of previous claims, wherein the top waterproofing layer (2) further comprises at least on UV-light stabilizer **S**, wherein the at least one UV-light stabilizer **S** preferably comprises at least one hindered amine light stabilizer (HALS).

9. The roofing membrane (1) according to claim 8, wherein the at least one UV-light stabilizer **S** comprises 0.35 - 15.0 wt.-%, preferably 0.5 - 10.0 wt.-% of the total weight of the top waterproofing layer (2).

10. The roofing membrane (1) according to any of previous claims, wherein the layer of fiber material (3) covers at least portion of the second major surface of the top waterproofing layer (2) and wherein the layer of fiber material (3) is preferably a non-woven fabric having a mass per unit area of 15 - 300 g/m², preferably 25 - 200 g/m².

11. The roofing membrane (1) according to any of previous claims, wherein the at least one thermoplastic polymer **P** is selected from the group consisting of propylene - ethylene copolymers, propylene - α-olefin copolymers, polypropylene homopolymers (PP), ethylene - α-olefin copolymers, polyethylene homopolymers, ethylene - vinyl acetate copolymer, and polyvinylchloride and/or wherein the at least one thermoplastic polymer **P** comprises 50 - 90 wt.-%, preferably 60 - 85 wt.-% of the total weight of the top waterproofing layer (2).

12. The roofing membrane (1) according to any of previous claims, wherein the at least one thermoplastic polymer **P** is polyvinylchloride.

13. The roofing membrane (1) according to any of previous claims, wherein the top waterproofing layer (2) further comprises 0.5 - 15.0 wt.-%, preferably 1.0 - 10.0 wt.-%, based on the total weight of the top waterproofing layer (2), of titanium dioxide.

14. A method for producing a roofing membrane according to any of claims 1-13, the method comprising extruding, calendaring, compressing, or casting a melt-processed composition of the top waterproofing layer.

15. A method for covering a roof substrate comprising steps of:
I. Applying two or more roofing membranes according to any of claims 1-13 on surface of the roof substrate to be covered,
II. Overlapping adjoining roofing membranes along the length and/or width of the roofing membranes,
III. Bonding the opposing surfaces of the overlapped portions to each other to provide acceptable seam strength by heat-welding or by adhesive bonding.
